# FASCICULE DE BREVET EUROPEEN

(11) **EP 3 677 890 B1**
(45) Date de publication et mention de la délivrance du brevet: **14.07.2021**
(21) Numéro de dépôt: 19219958.6
(22) Date de dépôt: 30.12.2019
(51) Int. Cl.: G01M 3/24, E03B 7/07, G01F 25/00, G01F 15/00

(54) **SYSTÈME DE SURVEILLANCE D'UN COMPTEUR D`EAU AVEC DISPOSITIF DE DÉTECTION D'UNE FUITE D`EAU EN AVAL DU COMPTEUR D`EAU**
ÜBERWACHUNGSSYSTEM EINES WASSERZÄHLERS MIT EINER DETEKTIONSVORRICHTUNG FÜR EIN HINTER DEM WASSERZÄHLER AUFTRETENDES WASSERLECK
SYSTEM FOR MONITORING A WATER METER WITH DEVICE FOR DETECTING A WATER LEAK DOWNSTREAM OF THE WATER METER

(30) Priorité: 03.01.2019 FR 1900027
(43) Date de publication de la demande: 08.07.2020
(73) Titulaire: Protecto, 13200 Arles (FR)
(72) Inventeur: AMARA, Mourad, 13200 ARLES (FR)
(74) Mandataire: Chevalier, Renaud Philippe

(56) Documents cités:
- WO-A1-2018/167438
- FR-A1- 2 811 750
- US-A1- 2012 103 069
- US-A1- 2017 234 709

## Description

L'invention se rapporte à un système de surveillance d'un compteur d'eau, ainsi qu'à un procédé de surveillance d'un compteur d'eau.

Elle se rapporte plus particulièrement à un système de surveillance comprenant un dispositif de détection pour une détection d'une fuite d'eau en aval du compteur d'eau.

De manière connue, il incombe à l'utilisateur du compteur d'eau, qu'il soit un locataire, un propriétaire ou un gestionnaire d'un réseau, de surveiller ou de prendre connaissance d'une fuite d'eau en aval de son compteur d'eau. Bien souvent, l'utilisateur, sous réserve qu'il soit présent sur place et observateur, détecte une fuite d'eau visuellement du fait de la présence incongrue d'une accumulation d'eau à l'extérieur de son réseau d'eau en aval du compteur d'eau. Quand l'utilisateur n'est pas présent ou que la fuite est discrète voire invisible (eg. fuite au niveau d'une canalisation enterrée ou encastrée), il peut éventuellement deviner une fuite en constatant une augmentation de sa consommation d'eau, et ce plusieurs mois après le début de la fuite dans la mesure où les factures d'eau sont généralement émises de manière annuelle voire au mieux trimestrielle, ce qui se traduit par un gâchis d'eau et une surfacturation non désirée.

Dans le document US2017/0234709 A1 il est proposé de détecter une fuite d'eau en aval du compteur d'eau en utilisant un capteur acoustique fixé sur le compteur pour détecter un son généré par une pièce mobile du compteur d'eau.

Il est donc important à ce jour d'apporter une solution qui permette une détection en temps réel d'une fuite d'eau en aval du compteur d'eau, pour des raisons évidentes d'économie des ressources en eau et d'économie financière.

A cette fin, l'invention propose un système de surveillance d'un compteur d'eau, ce système de surveillance comprenant une housse munie d'une partie centrale prévue pour envelopper le compteur d'eau, et comprenant en outre un dispositif de détection de fuite avale pour une détection d'une fuite d'eau en aval dudit compteur d'eau, ledit dispositif de détection de fuite avale comprenant :
- au moins un capteur acoustique disposé à l'intérieur de la partie centrale de la housse, ledit capteur acoustique étant prévu pour, en situation, détecter un son caractéristique d'un écoulement d'eau circulant à travers le compteur d'eau et généré par une pièce mobile, telle qu'une turbine, un rotor ou un piston, disposée à l'intérieur du compteur d'eau pour le comptage ; et
- un module de contrôle raccordé audit capteur acoustique pour recevoir et traiter un signal de détection acoustique généré par ledit capteur acoustique, et déterminer une fuite d'eau en aval dudit compteur d'eau en fonction dudit signal de détection acoustique.

Ainsi, l'invention propose de mesurer/détecter le son qui est généré par la pièce mobile du compteur d'eau pour le comptage. En effet, tout compteur d'eau comporte une telle pièce mobile, telle qu'une turbine, un rotor ou un piston, qui est disposée à l'intérieur du compteur d'eau et qui, sous l'effet d'un écoulement d'eau circulant à travers le compteur d'eau, est mise en mouvement et ce mouvement est converti en un comptage du volume d'eau en circulation au moyen d'un système de comptage. S'il y a une fuite d'eau en aval du compteur d'eau, alors nécessairement de l'eau circulera à travers le compteur d'eau, et ainsi la pièce mobile du compteur d'eau sera mise en mouvement, de sorte que le capteur acoustique va permettre de détecter cette mise en mouvement découlant de la fuite d'eau.

Le module de contrôle va quant à lui recevoir et traiter le signal de détection acoustique généré par le capteur acoustique, afin de déterminer la fuite d'eau en aval, en particulier en distinguant les écoulements d'eau qui relèvent d'une consommation normale par l'utilisateur des écoulements d'eau anormaux qui relèvent de fuites.

La housse va quant à elle permettre, en plus d'une fonction de protection thermique, de positionner le capteur acoustique à proximité du compteur d'eau, voire quasiment au contact du compteur d'eau, pour une bonne captation du son généré par la pièce mobile du compteur d'eau.

Selon une caractéristique, le module de contrôle est configuré pour déterminer une fuite d'eau en aval du compteur d'eau en mettant au moins en œuvre une comparaison du signal de détection acoustique avec au moins un seuil.

Ce ou ces seuils sont établis pour justement distinguer un écoulement d'eau circulant à travers le compteur d'eau qui relève d'une consommation normale, d'un écoulement d'eau anormal qui relève de la fuite d'eau en aval.

Selon une possibilité, le module de contrôle est configuré pour déterminer une fuite d'eau en aval du compteur d'eau en mettant au moins en œuvre une comparaison d'un paramètre représentatif d'un niveau sonore du signal de détection acoustique avec au moins un seuil de niveau sonore.

Selon une autre possibilité, le module de contrôle est configuré pour déterminer une fuite d'eau en aval du compteur d'eau en mettant au moins en œuvre une comparaison du signal de détection acoustique avec des signaux de détection acoustique générés sur une période passée.

Autrement dit, en tenant compte des signaux de détection acoustique du passé qui sont représentatifs d'une consommation normale, il est possible de détecter une anomalie qui traduirait la fuite d'eau en aval.

Selon une autre possibilité, le module de contrôle est configuré pour déterminer une fuite d'eau en aval du compteur d'eau en mettant au moins en œuvre un traitement du signal de détection acoustique sur au moins une période de référence, telle qu'une tranche horaire prédéfinie, et notamment une tranche horaire nocturne.

En effet, sur certaines périodes de référence, et notamment sur certaines tranches horaires, il peut être plus aisé de détecter une anomalie qui traduirait la fuite d'eau en aval, notamment parce que la consommation d'eau est censée être faible voire nulle sur ces périodes de référence.

Dans une réalisation particulière, le capteur acoustique est disposé sous une doublure textile prévue à l'intérieur de la partie central de la housse.

Avantageusement, la partie centrale de la housse est réalisée au moins partiellement en matière textile thermique à des fins de protection contre le gel du compteur d'eau.

Autrement dit, la housse est prévue pour former une housse de protection contre le gel du compteur d'eau, qui soit notamment adaptée pour épouser et isoler efficacement la forme du compteur d'eau (généralement en forme arrondie) afin de le protéger, l'isoler thermiquement et ainsi le préserver des chocs mais surtout du gel.

Dans un mode de réalisation particulier, la partie centrale de la housse est en forme de manchon tubulaire fermé conformé pour être enfilé ou glissé autour du compteur d'eau.

Ainsi, une telle housse est prévue pour que l'utilisateur enfile ou glisse la partie centrale de la housse autour du compteur, comme une chaussette, de préférence par le haut, afin que cette partie centrale forme un manchon fermé qui entoure et épouse le compteur d'eau, avec l'avantage de pouvoir plaquer le capteur acoustique contre le compteur d'eau, et ainsi accroitre la sensibilité de détection du son généré par la pièce mobile du compteur d'eau.

Selon une possibilité, le module de contrôle est disposé à l'intérieur de la housse, à des fins notamment de protection du module de contrôle.

Selon une autre possibilité, la housse présente un couvercle pouvant être ouvert ou refermé sur une ouverture supérieure de la partie centrale, et le module de contrôle est disposé à l'intérieur de ce couvercle.

Selon une variante, le système de surveillance comprend une batterie électrique connectée au module de contrôle.

Selon une variante, la batterie électrique est disposée à l'intérieur de la housse, et notamment à l'intérieur de son couvercle.

Dans une réalisation avantageuse, le système de surveillance comprend en outre un dispositif de détection de fuite interne pour une détection d'une fuite d'eau sur le compteur d'eau, ledit dispositif de détection de fuite interne comprenant :
- une manche interne réalisée dans un matériau textile imperméable, et s'étendant à l'intérieur de la partie centrale de la housse, où la manche interne présente une ouverture pourvue d'un système de serrage périphérique prévu pour un serrage de ladite ouverture autour du compteur d'eau ;
- au moins un capteur de présence d'eau disposé à l'intérieur de la housse au-dessus de ladite ouverture de la manche interne, ledit capteur de présence d'eau étant disposé en communication avec l'intérieur de la manche interne pour, en situation, détecter une présence d'eau fuitant du compteur d'eau au-dessus de l'ouverture serrée autour du compteur d'eau et s'accumulant dans une poche formée dans la manche interne et autour du compteur d'eau au-dessus de l'ouverture ; et
- un module de contrôle raccordé audit capteur de présence d'eau pour recevoir et traiter un signal de détection de présence d'eau généré par ledit capteur de présence d'eau, et déterminer une fuite d'eau sur le compteur d'eau en fonction dudit signal de détection de présence d'eau.

Ainsi, cette réalisation propose d'employer une manche interne, dans une housse, qui va avoir une ouverture serrée autour du compteur d'eau, et de préférence serrée en partie basse du compteur d'eau car ce dispositif de détection de fuite interne va permettre une détection d'une fuite dans la housse au-dessus de l'ouverture serrée, et pas en-dessous. En effet, lorsque le compteur d'eau a une fuite d'eau au-dessus de l'ouverture serrée, cette eau de fuite va couler le long du compteur d'eau et va venir s'accumuler à l'intérieur de la manche interne (pour rappel imperméable), dans une poche qui se forme autour du compteur d'eau, au-dessus de l'ouverture serrée ; le système de serrage périphérique permettant justement cette accumulation car empêchant au moins partiellement l'eau de couler plus bas et de s'échapper de la poche qui se forme. Enfin, le capteur de présence d'eau, nécessairement en communication avec l'intérieur de la manche interne au-dessus de l'ouverture serrée, détectera cette accumulation d'eau caractéristique d'une fuite d'eau sur le compteur d'eau au-dessus de l'ouverture serrée.

Le module de contrôle va quant à lui recevoir et traiter le signal de détection de présence d'eau généré par le capteur de présence d'eau, afin de déterminer la fuite d'eau sur le compteur d'eau.

Selon une variante, le capteur de présence d'eau est un capteur à flotteur.

Selon une variante, le capteur à flotteur est muni d'un flotteur déplaçable selon un niveau d'eau dans la poche, et d'un système de mesure mesurant le déplacement du flotteur et délivrant au module de contrôle le signal de détection de présence d'eau qui est représentatif de la position du flotteur.

Selon une autre variante, le capteur de présence d'eau est disposé au moins partiellement à l'intérieur d'une chambre étanche en communication fluidique avec l'intérieur de la manche interne au-dessus de l'ouverture de la manche interne.

Selon une autre variante, lequel le flotteur est disposé à l'intérieur de la chambre étanche.

Dans une variante particulière, le système de serrage périphérique est un système de serrage élastique ou un système de serrage avec un cordon de serrage coopérant avec un organe de maintien en position serrée.

Avantageusement, le système de surveillance comprend en outre un module de communication, et notamment un module de communication sans fil, raccordé au module de contrôle pour réceptionner un signal d'avertissement d'une fuite d'eau en aval généré par le module de contrôle lors d'une détection d'une fuite d'eau en aval dudit compteur d'eau, et pour ensuite communiquer vers l'extérieur ledit signal d'avertissement d'une fuite d'eau en aval.

Ainsi, ce module de communication va permettre de communiquer à l'extérieur, et en particulier à l'utilisateur du compteur d'eau ou à un service support ou à un serveur distant, une information quant à la présence d'une fuite d'eau (sous la forme du signal d'avertissement d'une fuite d'eau en aval).

Le cas échéant, ce module de communication est aussi prévu pour réceptionner un signal d'avertissement d'une fuite d'eau interne généré par le module de contrôle lors d'une détection d'une fuite d'eau sur le compteur d'eau, et pour ensuite communiquer vers l'extérieur ledit signal d'avertissement d'une fuite d'eau interne.

L'invention se rapporte également à une installation de surveillance d'un compteur d'eau, comprenant :
- au moins un système de surveillance tel que décrit ci-dessus, à savoir un système de surveillance équipé d'un module de communication, et
- un serveur distant en communication avec le module de communication du système de surveillance, ce serveur distant étant configuré pour recevoir le signal d'avertissement d'une fuite d'eau en aval et pour communiquer, en réponse à cette réception, un signal d'alarme à destination au moins d'un utilisateur ou exploitant dudit compteur d'eau.

Selon une réalisation, le serveur distant associe le signal d'alarme à l'une au moins des informations complémentaires suivantes : une information de géolocalisation du compteur d'eau, une information relative aux coordonnées d'un service support, une information relative aux coordonnées d'un ou plusieurs professionnels dans le secteur des fuites d'eau.

Ainsi, l'utilisateur ou exploitant du compteur d'eau reçoit, via le serveur distant, une ou plusieurs informations complémentaires qui pourront lui servir à gérer cette fuite d'eau.

L'invention concerne aussi un procédé de surveillance d'un compteur d'eau, comprenant une étape de positionnement d'une housse autour du compteur d'eau, cette housse étant munie d'une partie centrale prévue pour envelopper le compteur d'eau, et une étape de détection d'une fuite d'eau en aval du compteur d'eau en mettant en œuvre les sous-étapes suivantes :
- détection d'un son caractéristique d'un écoulement d'eau circulant à travers le compteur d'eau et généré par une pièce mobile, telle qu'une turbine, un rotor ou un piston, disposée à l'intérieur du compteur d'eau pour le comptage, ladite détection étant réalisée au moyen d'au moins un capteur acoustique disposé à l'intérieur de la partie centrale de la housse ; et
- réception et traitement du signal de détection acoustique généré par le capteur acoustique au moyen d'un module de contrôle raccordé au capteur acoustique, et détermination de la fuite d'eau en aval du compteur d'eau en fonction du signal de détection acoustique.

Avantageusement, ce procédé de surveillance comprend en outre une étape de génération d'un signal d'avertissement d'une fuite d'eau en aval lors d'une détection d'une fuite d'eau en aval du compteur d'eau, suivie d'une étape de communication, notamment une communication sans fil, vers l'extérieur dudit signal d'avertissement d'une fuite d'eau en aval.

Selon une variante, ce procédé de surveillance comprend une étape de détection d'une fuite d'eau sur le compteur d'eau en mettant en œuvre les sous-étapes suivantes :
- engagement d'une manche interne autour du compteur d'eau, cette manche interne étant réalisée dans un matériau textile imperméable, et s'étendant à l'intérieur de la partie centrale de la housse, et où la manche interne présente une ouverture pourvue d'un système de serrage périphérique ;
- serrage de l'ouverture de la manche interne autour du compteur d'eau au moyen du système de serrage périphérique ;
- détection d'une présence d'eau fuitant du compteur d'eau au-dessus de l'ouverture serrée de la manche interne autour du compteur d'eau et s'accumulant dans une poche formée dans la manche interne et autour du compteur d'eau au-dessus de l'ouverture de la manche interne, où cette détection est réalisée au moyen d'au moins un capteur de présence d'eau disposé à l'intérieur de la housse au-dessus de cette ouverture, ce capteur de présence d'eau étant disposé en communication avec l'intérieur de la manche interne ; et
- réception et traitement du signal de détection de présence d'eau généré par ce capteur de présence d'eau au moyen d'un module de contrôle raccordé au capteur de présence d'eau, et détermination de la fuite d'eau sur le compteur d'eau en fonction de ce signal de détection de présence d'eau.

Avantageusement, ce procédé de surveillance comprend en outre une étape de génération d'un signal d'avertissement d'une fuite d'eau interne lors d'une détection d'une fuite d'eau sur le compteur d'eau, suivie d'une étape de communication, notamment une communication sans fil, vers l'extérieur du signal d'avertissement d'une fuite d'eau interne.

D'autres caractéristiques et avantages de la présente invention apparaîtront à la lecture de la description détaillée ci-après, d'un exemple de mise en œuvre non limitatif, faite en référence aux figures annexées dans lesquelles :
[Fig.1] est une vue schématique en perspective d'un système de surveillance conforme à l'invention ;
[Fig.2] est une vue schématique de face du système de surveillance de la figure 1 en place sur un compteur d'eau ;
[Fig.3] est une vue schématique de dos du système de surveillance de la figure 1 en place sur un compteur d'eau ;
[Fig.4] est une vue schématique en biais de dessous et de dos du système de surveillance de la figure 1 en place sur un compteur d'eau, avec le bas de sa partie centrale qui est ouvert et avec ses parties inférieures ouvertes ;
[Fig.5] est une vue schématique en biais de dessous et de dos du système de surveillance de la figure 1 en place sur un compteur d'eau, avec le bas de sa partie centrale qui est fermée et avec ses parties inférieures ouvertes ;
[Fig.6] est une vue schématique de dessus du système de surveillance de la figure 1, avec le couvercle qui est ouvert pour pouvoir visualiser la manche interne et son ouverture munie d'un système de serrage périphérique ;
[Fig.7] est une vue schématique de dessus du système de surveillance de la figure 1 en place sur un compteur d'eau, avec le couvercle qui est ouvert pour pouvoir visualiser le compteur d'eau enveloppé par la housse ;
[Fig.8] est une vue schématique en perspective du compteur d'eau des figures 2 à 5 et 7, sans le système de surveillance ;

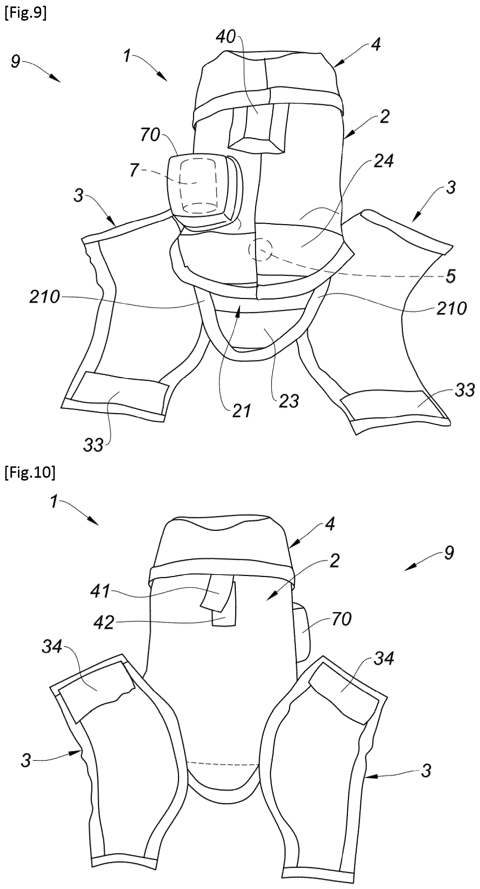

[Fig.9] est une vue schématique en biais de dessous et de dos du système de surveillance de la figure 1, avec le bas de sa partie centrale qui est ouvert et avec ses parties inférieures ouvertes ;
[Fig.10] est une vue schématique de face du système de surveillance de la figure 1, avec le bas de sa partie centrale qui est ouvert et avec ses parties inférieures ouvertes ; et
[Fig.11] est une vue schématique d'une installation de surveillance selon l'invention, comprenant le système de surveillance de la figure 1 en liaison non filaire avec un serveur distant.

En référence aux figures, un système de surveillance 9 selon un mode de réalisation de l'invention, donné à titre d'exemple non limitatif, comporte une housse 1 conformée pour former une housse de protection contre le gel d'un appareil hydraulique qui, dans la suite de la description, est un compteur d'eau 10.

Un tel compteur d'eau 10 comporte :
- une partie haute 11 intégrant un mécanisme de comptage interne (non visible) et un cadran 12 au sommet, et
- une partie basse 15 de laquelle partent, sur deux côtés opposés, des conduits d'entrée et de sortie 13 munies d'extrémités filetées 14 pour connecter par vissage respectivement une canalisation d'entrée d'eau et une canalisation de sortie d'eau.

L'eau circulant à travers le compteur d'eau 10 dans sa partie basse 15, et cette partie basse 15 accueille intérieurement une pièce mobile (non visible), telle qu'une turbine, un rotor ou un piston, disposée à l'intérieur du compteur d'eau pour le comptage. Sous l'effet de l'écoulement d'eau circulant à travers le compteur d'eau 10, cette pièce mobile est mise en mouvement et ce mouvement est converti en un comptage du volume d'eau en circulation au moyen du mécanisme de comptage interne accouplé à la pièce mobile, ce comptage étant affiché sur le cadran 12.

La housse 1 comprend quatre parties confectionnées chacune à partir d'un complexe textile thermique et cousues entre elles pour présenter une forme générale de « T » à l'envers.

Le complexe textile thermique comprend une superposition de plusieurs couches textiles isolantes, et notamment entre quatre et neuf couches textiles isolantes, recouvertes d'une toile d'imperméabilisation telle que par exemple une toile non tissée enduit PVC.

Ainsi, le complexe textile thermique procure protection et isolation thermique, et la toile d'imperméabilisation forme une membrane extérieure afin de procurer une imperméabilisation.

Plus précisément, la housse 1 comprend :
- une partie centrale 2 en forme de manchon tubulaire fermé présentant une ouverture supérieure 20 (sur le haut de la partie centrale 2) et une ouverture inférieure 21 (sur le bas de la partie centrale 2), où l'ouverture inférieure 21 présente des échancrures 210 à droite et à gauche ;
- deux parties inférieures 3 formant, de chaque côté de la partie centrale 2 à droite et à gauche, des prolongements pour les échancrures 210 respectives, où ces parties inférieures 3 sont en forme de tubes ouverts pouvant être refermés sur eux-mêmes, et où ces parties inférieures 3 sont cousues sur la partie centrale 2 ; et
- un couvercle 4 montée sur le haut la partie centrale 2 et pouvant être ouvert ou refermé sur l'ouverture supérieure 20 de la partie centrale 2.

Le couvercle 4 est rattaché à la partie centrale 2 au moyen d'une languette 40 cousue à la fois sur le couvercle 4 et sur la partie centrale 2 ; une telle languette souple autorisant l'ouverture/fermeture du couvercle 4.

Le couvercle 4 est muni d'un ruban auto-agrippant 41 associé à un ruban auto-agrippant 42 complémentaire prévu sur la partie centrale 2 pour maintenir fermée le couvercle 4 sur l'ouverture supérieure 20.

Le couvercle 4 est muni d'un disque 43 bordé par un bord rabattu périphérique 44 propre à recouvrir sur l'extérieur la partie centrale 2 lorsque ce couvercle 4 est refermé. Ce bord rabattu périphérique 44 venant en recouvrement du haut de la partie centrale 2, ce bord rabattu périphérique 44 peut être formé uniquement de la toile d'imperméabilisation. Par contre, le disque 43 est bien formé du complexe textile thermique.

En situation, le couvercle 4 recouvre le dessus du compteur d'eau 10, autrement dit recouvre sa partie haute 11 et son cadran 12.

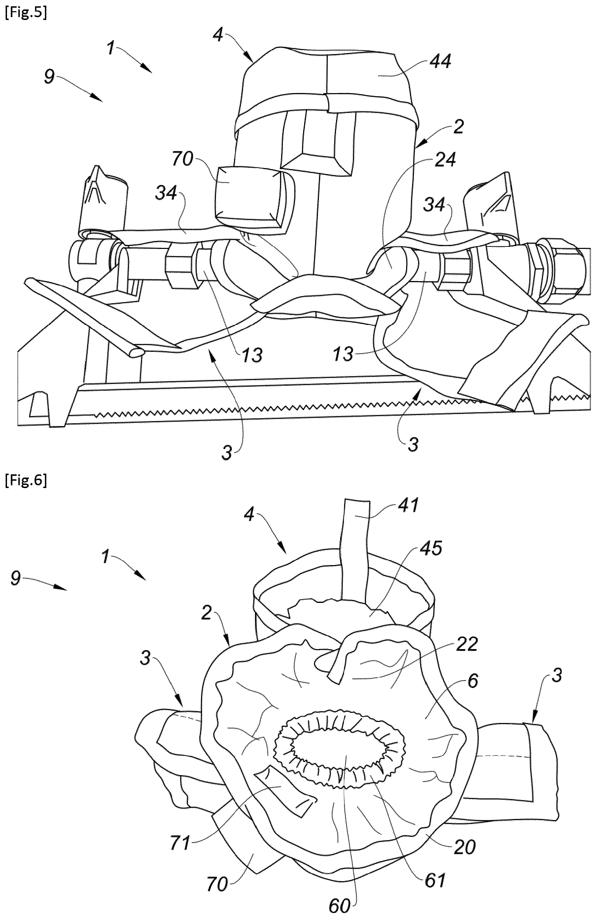

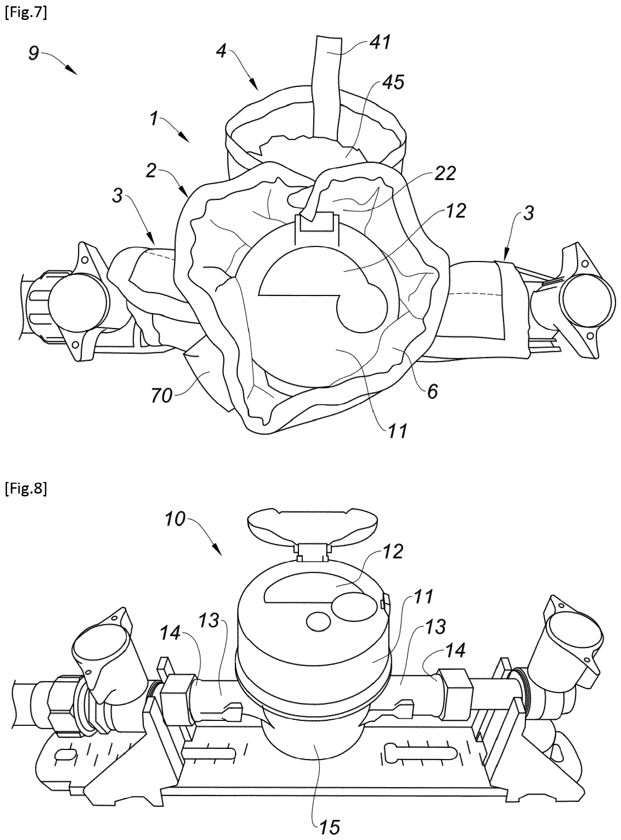

La partie centrale 2 est fermée sur toute sa hauteur, de son ouverture inférieure 21 jusqu'à son ouverture supérieure 20, par couture. Comme visible sur les figures 6 et 7, la partie centrale 2 est fermée par au moins une couture intérieure 22 le long de deux rabats tournés vers l'intérieur.

La partie centrale 2 présente sur le bas des rubans auto-agrippant 23, 24 complémentaires, de part et d'autres des échancrures 210, permettant de fermer l'ouverture inférieure 21, avec plus précisément un ruban auto-agrippant intérieur 23 prévu sur une face intérieure de la partie centrale 2, et un ruban auto-agrippant extérieur 24 prévu sur une face extérieure de la partie centrale 2 pour une fermeture par recouvrement de cette face intérieure sur la face extérieure.

Les parties inférieures 3 sont cousues à l'extérieur sur les côtés de la partie centrale 2, le long des échancrures 210.

Ces parties inférieures 3 présentent des rubans auto-agrippant 33, 34 complémentaires pour maintenir les parties inférieures 3 refermées sur elles-mêmes, avec plus précisément pour chaque partie inférieure 3 un ruban auto-agrippant intérieur 33 prévu sur une face intérieure de la partie inférieure 3, et un ruban auto-agrippant extérieur 34 prévu sur une face extérieure de la partie inférieure 3 pour une fermeture par recouvrement de cette face intérieure sur la face extérieure.

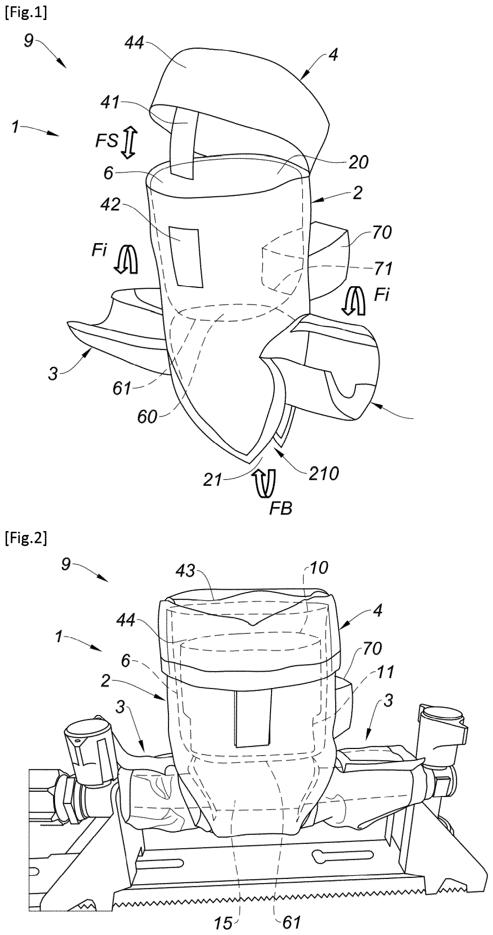

Pour protéger et isoler contre le gel le compteur d'eau 10 au moyen d'une telle housse 1, il faut mettre en œuvre les étapes suivantes :
- glisser (ou enfiler) la partie centrale 2 autour du compteur d'eau 10 jusqu'à ce que les conduits d'entrée et de sortie 13 du compteur d'eau 10 se placent dans les échancrures 210 respectives de la partie centrale 2 ;
- refermer les deux parties inférieures 3 autour des conduits d'entrée et de sortie 13 respectives du compteur d'eau 10 au moyen des rubans auto-agrippant 33, 34, où ces parties inférieures 3 recouvrent ainsi respectivement les conduits d'entrée et de sortie 13 jusqu'à leurs extrémités filetées 14 respectives (comme schématisé par les flèches FI sur la figure 1) ;
- refermer le couvercle 4 sur l'ouverture supérieure 20 de la partie centrale 2 et sur le cadran 12 du compteur d'eau 10 au moyen des rubans auto-agrippant 41, 42 (comme schématisé par la flèche FS sur la figure 1) ; et
- refermer l'ouverture inférieure 21 de la partie centrale 2 (autrement dit refermer le bas de cette partie centrale 2) au moyen des rubans auto-agrippant 23, 24 sous la partie basse 15 du compteur d'eau 10 (comme schématisé par la flèche FB sur la figure 1).

Par ailleurs, et dans le cadre de l'invention, le système de surveillance 9 comprend en outre un dispositif de détection de fuite avale pour une détection d'une fuite d'eau en aval du compteur d'eau 10.

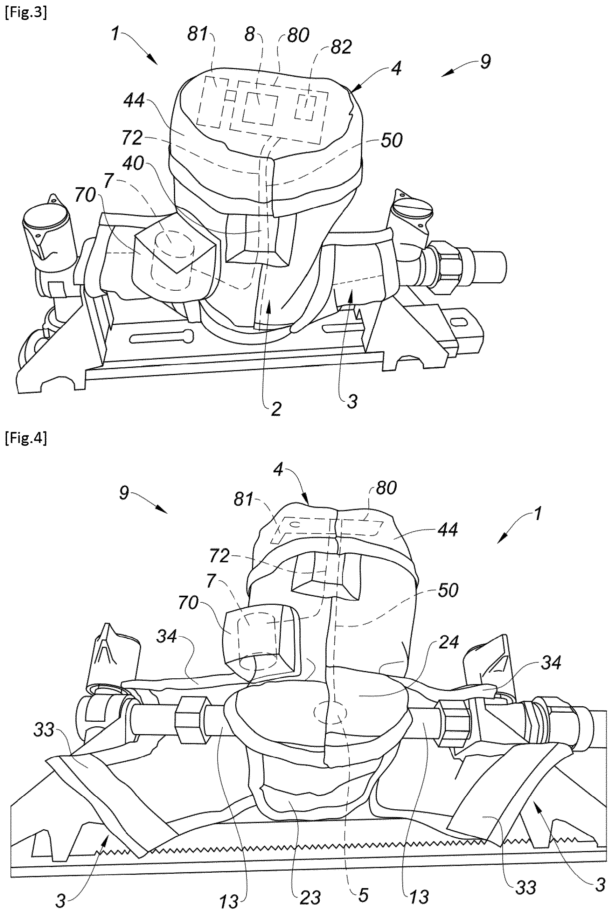

Ce dispositif de détection de fuite avale comprend un capteur acoustique 5 disposé à l'intérieur de la partie centrale 2 de la housse 1. Comme visible sur les figures 4 et 5, ce capteur acoustique 5 (illustré en traits interrompus) est disposé sur le bas de la partie centrale 2, et notamment en-dessous des rubans auto-agrippant 24, de sorte que, une fois la housse 1 fermée, ce capteur acoustique 5 est plaqué contre la partie basse 15 du compteur d'eau 10, et notamment sur le dessous de la partie basse 15 du compteur d'eau 10.

Ce capteur acoustique 5 est prévu pour, en situation, détecter un son caractéristique d'un écoulement d'eau circulant à travers le compteur d'eau et généré par la pièce mobile qui est pour rappel disposée à l'intérieur du compteur d'eau 10 pour le comptage.

Ce capteur acoustique 5 peut par exemple être du type microphone électrostatique, microphone électrostatique à électret, microphone électromagnétique à bobine mobile, ou microphone électromagnétique à ruban.

Ce capteur acoustique 5 peut être est disposé sous une doublure textile (en l'occurrence la manche interne 6 décrite plus loin) prévue à l'intérieur de la partie centrale 2 de la housse 1, de sorte que le capteur acoustique 5 est plaqué contre la partie basse 15 du compteur d'eau 10 avec interposition de la doublure textile ; ladite doublure textile étant suffisamment fine pour ne pas gêner la captation de son opérée par le capteur acoustique 5.

Ce dispositif de détection de fuite avale comprend en outre un module de contrôle 8 raccordé au capteur acoustique 5 pour recevoir et traiter un signal de détection acoustique généré par le capteur acoustique 5, et pour déterminer une fuite d'eau en aval du compteur d'eau 10 en fonction de ce signal de détection acoustique.

Ainsi, le module de contrôle 8 va pouvoir déterminer s'il y a une fuite d'eau en aval du compteur d'eau 10, et ainsi émettre un signal d'avertissement d'une fuite d'eau en aval SFA, en analysant le signal de détection acoustique qui caractérise le son qui est généré par la pièce mobile du compteur d'eau 10 pour le comptage, et qui est ainsi représentatif d'un débit de circulation d'eau à travers le compteur d'eau 10.

En cas d'une fuite d'eau en aval du compteur d'eau 10, alors de l'eau circulera à travers le compteur d'eau 10, et ainsi la pièce mobile du compteur d'eau 10 sera mise en mouvement et générera donc un son qui sera capté le capteur acoustique 5, de sorte que ce capteur acoustique 5 va permettre de détecter cette mise en mouvement découlant de la fuite d'eau en aval.

En l'absence de fuite, le signal de détection acoustique doit présenter une ligne de base nulle, car en l'absence d'une consommation il n'y a aucun écoulement dans le compteur d'eau 10 et alors aucun son ne doit être généré par la pièce mobile du compteur d'eau 10. Par contre, en présence d'une fuite, le signal de détection acoustique présentera une ligne de base non nulle, car cette fuite se traduira par un écoulement continu et ininterrompu dans le compteur d'eau 10 et donc par un fond sonore généré par la pièce mobile du compteur d'eau 10.

Le module de contrôle 8 va quant à lui recevoir et traiter le signal de détection acoustique, afin de déterminer la fuite d'eau en aval, en particulier en distinguant les écoulements d'eau qui relèvent d'une consommation normale des écoulements d'eau anormaux qui relèvent d'une telle fuite en aval, et en particulier en détectant une ligne de base non nulle du signal de détection acoustique.

Ce module de contrôle 8 est configuré pour déterminer une fuite d'eau en aval du compteur d'eau 10 en mettant au moins en œuvre une comparaison du signal de détection acoustique avec au moins un seuil, et notamment une comparaison d'un paramètre représentatif d'un niveau sonore du signal de détection acoustique avec au moins un seuil de niveau sonore.

Ce module de contrôle 8 peut aussi mettre en œuvre une comparaison du signal de détection acoustique avec des signaux de détection acoustique générés sur une période passée, étant dans ce cas prévu une mémoire pour stocker de tels signaux de détection acoustique générés sur une période passée.

Ce module de contrôle 8 peut également mettre en œuvre son traitement du signal de détection acoustique sur au moins une période de référence quotidiennement, telle qu'une tranche horaire prédéfinie, et notamment une tranche horaire nocturne, car une telle tranche horaire nocturne va permettre de détecter plus aisément une anomalie qui traduirait la fuite d'eau en aval, notamment parce que la consommation d'eau est censée être faible voire nulle sur une tranche horaire nocturne.

Ce module de contrôle 8 est schématiquement illustré en traits interrompus sur les figures 3 et 4, et il se présente sous la forme d'un processeur ou contrôleur intégré à une carte électronique 80 disposée dans le couvercle 4 de la housse 1. La carte électronique 80 et le module de contrôle 8 sont disposés notamment sous le disque 43 du couvercle 4, et ils peuvent être disposés sous une doublure textile 45 imperméable (visible sur les figures 6 et 7) prévue à l'intérieur du couvercle 4.

Le capteur acoustique 5 est raccordé à la carte électronique 80 et au module de contrôle 8 via une connectique filaire 50 qui circule de préférence en-dessous d'une doublure textile prévue à l'intérieur de la partie centrale 2 de la housse 1, et qui passe dans la languette 40 pour rejoindre la carte électronique 80.

Ce dispositif de détection de fuite avale comprend également une batterie électrique 81 connectée au module de contrôle 8 et à la carte électronique 80, pour alimenter électriquement le dispositif de détection de fuite avale. Cette batterie électrique 81 peut aussi être disposée dans le couvercle 4 de la housse 1, sous la doublure textile 45 prévue à l'intérieur du couvercle 4.

Le système de surveillance 9 comprend aussi un module de communication 82 raccordé au module de contrôle 8, et également intégré à la carte électronique 80 pour réceptionner le signal d'avertissement d'une fuite d'eau en aval SFA généré par le module de contrôle 8 et pour ensuite communiquer vers l'extérieur ce signal d'avertissement d'une fuite d'eau en aval SFA.

Ce module de communication 82 est notamment un module de communication sans fil (ou module de radiocommunication) qui peut se présenter sous la forme d'une puce de radiocommunication intégrée à la carte électronique 80, comme par exemple une puce de radiocommunication 2G, 3G, 4G, 5G, GSM, etc.

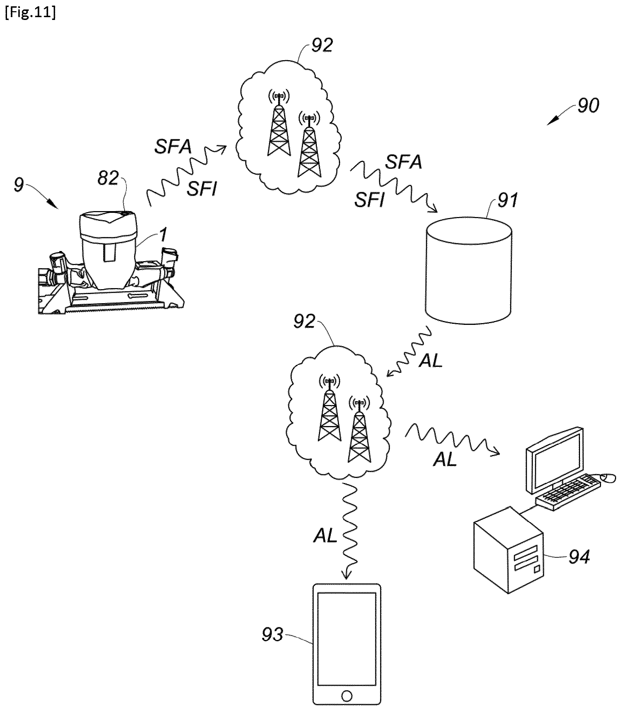

En référence à la figure 11, ce système de surveillance 9 peut s'intégrer dans une installation de surveillance 90 qui comprend au moins un tel système de surveillance 9 (voire plusieurs systèmes de surveillance 9 dans le cadre d'une surveillance simultanée de plusieurs compteurs d'eau 10), et qui comprend en outre un serveur distant 91 en communication sans fil avec le module de communication 82 du système de surveillance 9, via un réseau de télécommunication 92.

Ce serveur distant 91 est quant à lui configuré pour recevoir ce signal d'avertissement d'une fuite d'eau en aval SFA et pour communiquer, en réponse à cette réception, un signal d'alarme AL à destination au moins d'un utilisateur (par exemple sur un terminal mobile 93 tel qu'un téléphone intelligent) ou d'un exploitant du compteur d'eau 10 (par exemple sur un terminal informatique 94), aussi via un réseau de télécommunication 92.

Le serveur distant 91 peut également associer le signal d'alarme AL à l'une au moins des informations complémentaires suivantes :
- une information de géolocalisation du compteur d'eau 10 concerné par la fuite,
- une information relative aux coordonnées d'un service support, pour que l'utilisateur puisse joindre ce service support qui lui procurera aide et support dans la gestion de la fuite ;
- une information relative aux coordonnées d'un ou plusieurs professionnels dans le secteur des fuites d'eau, comme des professionnels en réparation des fuites et/ou des professionnels en détection des fuites.

Il est à noter que le système de surveillance 9 peut aussi intégrer un dispositif de détection de fuite interne pour une détection d'une fuite d'eau sur le compteur d'eau 10.

Ce dispositif de détection de fuite interne comprend une manche interne 6 réalisée dans un matériau textile imperméable, et s'étendant à l'intérieur de la partie centrale 2 de la housse 1, où la manche interne 6 forme une doublure interne dans la housse 1.

Cette manche interne 6 présente une ouverture supérieure qui se situe au niveau de l'ouverture supérieure 20 de la partie centrale 2, et une ouverture inférieure qui se situe au niveau de l'ouverture inférieure 21 de la partie centrale 2.

Cette manche interne 6 présente une ouverture intermédiaire 60 pourvue d'un système de serrage périphérique 61 prévu pour un serrage de cette ouverture intermédiaire 60 autour du compteur d'eau 10. Cette ouverture intermédiaire 60 se situe entre l'ouverture supérieure et l'ouverture inférieure de la manche interne 6.

Cette ouverture intermédiaire 60 et son système de serrage périphérique 61 sont prévus pour enserrer le compteur d'eau 10 juste en-dessous de sa partie haute 11, de sorte que sa partie haute 11 se retrouve au-dessus du système de serrage périphérique 61 et sa partie basse 15 se retrouve en-dessous du système de serrage périphérique 61.

Comme visible sur la figure 6, le système de serrage périphérique 61 est un système de serrage élastique, de sorte que l'ouverture intermédiaire 60 est rétrécie au repos (en l'absence du compteur d'eau 10) et s'écarte naturellement lors du passage du compteur d'eau 10 pour venir se serrer sur tout le pourtour du compteur d'eau 10 une fois la housse 1 en place.

Ce dispositif de détection de fuite interne comprend également un capteur de présence d'eau 7 disposé à l'intérieur de la housse 1 au-dessus de cette ouverture intermédiaire 60 de la manche interne 6.

Plus précisément, ce capteur de présence d'eau 7 est disposé à l'intérieur d'une chambre étanche 70 en communication fluidique avec l'intérieur de la manche interne 6 au-dessus de l'ouverture intermédiaire 60 de la manche interne 6. Cette chambre étanche 70 forme une protubérance saillante de la partie centrale 2 de la housse 1, et elle peut être réalisée dans le même matériau isolant que la partie centrale 2. Cette chambre étanche 70 fait ainsi partie intégrante de la housse 1. Comme visible sur la figure 6, cette chambre étanche 70 est ouverte sur l'intérieur de la manche interne 6, via une fenêtre 71 au-dessus de l'ouverture intermédiaire 60.

Ce capteur de présence d'eau 7 est ainsi disposé en communication avec l'intérieur de la manche interne 6 pour, en situation, détecter une présence d'eau fuitant du compteur d'eau 10 au-dessus de l'ouverture intermédiaire 60 serrée autour du compteur d'eau 10 et s'accumulant dans une poche formée dans la manche interne 6 et autour du compteur d'eau 10 au-dessus de l'ouverture intermédiaire 60.

Ainsi, lorsque le compteur d'eau 10 aura une fuite au niveau de sa partie haute 11, cette eau de fuite va couler le long du compteur d'eau 10 et va venir s'accumuler à l'intérieur de la manche interne 6, dans une poche qui se forme autour du compteur d'eau 10, au-dessus de l'ouverture intermédiaire 60 serrée ; le système de serrage périphérique 61 permettant justement cette accumulation car empêchant au moins partiellement l'eau de couler plus bas et de s'échapper de la poche qui se forme. Le capteur de présence d'eau 7, en communication avec l'intérieur de la manche interne 6 via la fenêtre 71 prévue au-dessus de l'ouverture intermédiaire 60 serrée, détectera cette accumulation d'eau caractéristique d'une fuite d'eau (dite fuite d'eau interne car à l'intérieur de la housse 1) sur la partie haute 11 du compteur d'eau 10 au-dessus de l'ouverture intermédiaire 60 serrée. Autrement dit le niveau d'eau va monter dans la poche et va ainsi monter dans la chambre étanche 70, de sorte que ce capteur de présence d'eau 7 va détecter cette montée/présence d'eau.

Ce capteur de présence d'eau 7 peut être un capteur à flotteur muni d'un flotteur disposé à l'intérieur de la chambre étanche 70 et déplaçable selon un niveau d'eau dans la poche, et d'un système de mesure mesurant le déplacement du flotteur et délivrant un signal de détection de présence d'eau qui est représentatif de la position du flotteur.

Ce dispositif de détection de fuite interne comprend en outre un module de contrôle raccordé au capteur de présence d'eau 7 pour recevoir et traiter le signal de détection de présence d'eau généré par le capteur de présence d'eau 7, et pour déterminer une fuite d'eau sur le compteur d'eau 10 en fonction de ce signal de détection de présence d'eau. Ce module de contrôle du dispositif de détection de fuite interne correspond de préférence au module de contrôle 8 du dispositif de détection de fuite avale.

Ainsi, le module de contrôle 8 va pouvoir déterminer s'il y a une fuite d'eau sur le compteur d'eau 10, et ainsi émettre un signal d'avertissement d'une fuite d'eau interne SFI, en analysant le signal de détection de présence d'eau qui caractérise une fuite d'eau sur la partie haute 11 du compteur d'eau 10.

Le module de communication 82 va pouvoir réceptionner le signal d'avertissement d'une fuite d'eau interne SFI généré par le module de contrôle 8, et ensuite communiquer vers l'extérieur ce signal d'avertissement d'une fuite d'eau interne SFI, et notamment au serveur distant 91.

Ce serveur distant 91 est ainsi configuré pour recevoir ce signal d'avertissement d'une fuite d'eau interne SFI et pour communiquer, en réponse à cette réception, un signal d'alarme AL à destination au moins d'un utilisateur (par exemple sur un terminal mobile 93 tel qu'un téléphone intelligent) ou d'un exploitant du compteur d'eau 10 (par exemple sur un terminal informatique 94), aussi via un réseau de télécommunication 92.

## Revendications

1. Système de surveillance (9) d'un compteur d'eau (10), ledit système de surveillance (9) comprenant une housse (1) munie d'une partie centrale (2) prévue pour envelopper le compteur d'eau (10), et comprenant en outre un dispositif de détection de fuite avale pour une détection d'une fuite d'eau en aval dudit compteur d'eau (10), ledit dispositif de détection de fuite avale comprenant :
- au moins un capteur acoustique (5) disposé à l'intérieur de la partie centrale (2) de la housse (1), ledit capteur acoustique (5) étant prévu pour, en situation, détecter un son caractéristique d'un écoulement d'eau circulant à travers le compteur d'eau (10) et généré par une pièce mobile, telle qu'une turbine, un rotor ou un piston, disposée à l'intérieur du compteur d'eau (10) pour le comptage ; et
- un module de contrôle (8) raccordé audit capteur acoustique (5) pour recevoir et traiter un signal de détection acoustique généré par ledit capteur acoustique (5), et déterminer une fuite d'eau en aval dudit compteur d'eau (10) en fonction dudit signal de détection acoustique.

2. Système de surveillance (9) selon la revendication 1, dans lequel le module de contrôle (8) est configuré pour déterminer une fuite d'eau en aval dudit compteur d'eau (10) en mettant au moins en œuvre une comparaison dudit signal de détection acoustique avec au moins un seuil.

3. Système de surveillance (9) selon la revendication 2, dans lequel le module de contrôle (8) est configuré pour déterminer une fuite d'eau en aval dudit compteur d'eau (10) en mettant au moins en œuvre une comparaison d'un paramètre représentatif d'un niveau sonore dudit signal de détection acoustique avec au moins un seuil de niveau sonore.

4. Système de surveillance (9) selon l'une quelconque des revendications précédentes, dans lequel le module de contrôle (8) est configuré pour déterminer une fuite d'eau en aval dudit compteur d'eau (10) en mettant au moins en œuvre une comparaison dudit signal de détection acoustique avec des signaux de détection acoustique générés sur une période passée.

5. Système de surveillance (9) selon l'une quelconque des revendications précédentes, dans lequel le module de contrôle (8) est configuré pour déterminer une fuite d'eau en aval dudit compteur d'eau (10) en mettant au moins en œuvre un traitement dudit signal de détection acoustique sur au moins une période de référence, telle qu'une tranche horaire prédéfinie, et notamment une tranche horaire nocturne.

6. Système de surveillance (9) selon l'une quelconque des revendications précédentes, dans lequel le capteur acoustique (5) est disposé sous une doublure textile (6) prévue à l'intérieur de la partie centrale (2) de la housse (1).

7. Système de surveillance (9) selon l'une quelconque des revendications précédentes, dans lequel la partie centrale (2) de la housse (1) est réalisée au moins partiellement en matière textile thermique à des fins de protection contre le gel du compteur d'eau (10).

8. Système de surveillance (9) selon l'une quelconque des revendications précédentes, dans lequel la partie centrale (2) de la housse (1) est en forme de manchon tubulaire fermé conformé pour être enfilé ou glissé autour du compteur d'eau (10).

9. Système de surveillance (9) selon l'une quelconque des revendications précédentes, dans lequel le module de contrôle (8) est disposé à l'intérieur de la housse (1), et par exemple à l'intérieur d'un couvercle (4) de la housse (1) pouvant être ouvert ou refermé sur une ouverture supérieure de la partie centrale (2).

10. Système de surveillance (9) selon l'une quelconque des revendications précédentes, comprenant en outre un dispositif de détection de fuite interne pour une détection d'une fuite d'eau sur le compteur d'eau (10), ledit dispositif de détection de fuite interne comprenant :
- une manche interne (6) réalisée dans un matériau textile imperméable, et s'étendant à l'intérieur de la partie centrale (2) de la housse (1), où la manche interne (6) présente une ouverture (60) pourvue d'un système de serrage périphérique (61) prévu pour un serrage de ladite ouverture (60) autour du compteur d'eau (10) ;
- au moins un capteur de présence d'eau (7) disposé à l'intérieur de la housse (1) au-dessus de ladite ouverture (60) de la manche interne (6), ledit capteur de présence d'eau (7) étant disposé en communication avec l'intérieur de la manche interne (6) pour, en situation, détecter une présence d'eau fuitant du compteur d'eau (10) au-dessus de l'ouverture (60) serrée autour du compteur d'eau (10) et s'accumulant dans une poche formée dans la manche interne (6) et autour du compteur d'eau (10) au-dessus de l'ouverture (60) ; et
- un module de contrôle (8) raccordé audit capteur de présence d'eau (7) pour recevoir et traiter un signal de détection de présence d'eau généré par ledit capteur de présence d'eau (7), et déterminer une fuite d'eau sur le compteur d'eau (10) en fonction dudit signal de détection de présence d'eau.

11. Système de surveillance (9) selon l'une quelconque des revendications précédentes, comprenant en outre un module de communication (82), et notamment un module de communication (82) sans fil, raccordé au module de contrôle (8) pour réceptionner un signal d'avertissement d'une fuite d'eau en aval (SFA) généré par le module de contrôle (8) lors d'une détection d'une fuite d'eau en aval dudit compteur d'eau (10), et pour ensuite communiquer vers l'extérieur ledit signal d'avertissement d'une fuite d'eau en aval (SFA).

12. Installation de surveillance (90) d'un compteur d'eau (10), comprenant au moins un système de surveillance (9) conforme à la revendication précédente et un serveur distant (91) en communication avec le module de communication (82) du système de surveillance (9), ledit serveur distant (91) étant configuré pour recevoir ledit signal d'avertissement d'une fuite d'eau en aval (SFA) et pour communiquer, en réponse à cette réception, un signal d'alarme (AL) à destination au moins d'un utilisateur ou d'un exploitant dudit compteur d'eau (10).

13. Installation de surveillance (90) selon la revendication précédente, dans laquelle le serveur distant (91) associe le signal d'alarme (AL) à l'une au moins des informations complémentaires suivantes : une information de géolocalisation du compteur d'eau (10), une information relative aux coordonnées d'un service support, une information relative aux coordonnées d'un ou plusieurs professionnels dans le secteur des fuites d'eau.

14. Procédé de surveillance d'un compteur d'eau (10), ledit procédé de surveillance comprenant une étape de positionnement d'une housse (1) autour du compteur d'eau (10), ladite housse (1) étant munie d'une partie centrale (2) prévue pour envelopper le compteur d'eau (10), et une étape de détection d'une fuite d'eau en aval dudit compteur d'eau (10) en mettant en œuvre les sous-étapes suivantes :
- détection d'un son caractéristique d'un écoulement d'eau circulant à travers le compteur d'eau (10) et généré par une pièce mobile, telle qu'une turbine, un rotor ou un piston, disposée à l'intérieur du compteur d'eau (10) pour le comptage, ladite détection étant réalisée au moyen d'au moins un capteur acoustique (5) disposé à l'intérieur de la partie centrale (2) de la housse (1) ; et
- réception et traitement du signal de détection acoustique généré par ledit capteur acoustique (5) au moyen d'un module de contrôle (8) raccordé audit capteur acoustique (5), et détermination de la fuite d'eau en aval dudit compteur d'eau (10) en fonction dudit signal de détection acoustique.

15. Procédé de surveillance selon la revendication 14, comprenant en outre une étape de génération d'un signal d'avertissement d'une fuite d'eau en aval (SFA) lors d'une détection d'une fuite d'eau en aval du compteur d'eau (10), suivie d'une étape de communication, notamment une communication sans fil, vers l'extérieur dudit signal d'avertissement d'une fuite d'eau en aval (SFA).

## Patentansprüche

1. Überwachungssystem (9) eines Wasserzählers (10), wobei das Überwachungssystem (9) eine Abdeckung (1) umfasst, die mit einem Mittelstück (2) versehen ist, die zum Umhüllen des Wasserzählers (10) vorgesehen ist, und des Weiteren eine nachgeordnete Leckdetektionsvorrichtung für eine dem Wasserzähler (10) nachgeordnete Detektion eines Wasserlecks umfasst, wobei die nachgeordnete Leckdetektionsvorrichtung umfasst:
- mindestens einen im Inneren des Mittelstücks (2) der Abdeckung (1) angeordneten Schallsensor (5), wobei der Schallsensor (5) vorgesehen ist zum Detektieren, in der Situation, eines für ein Strömen von durch den Wasserzähler (10) zirkulierendem Wasser und durch ein im Inneren des Wasserzählers (10) angeordnetes bewegliches Teil für die Zählung, wie eine Turbine, ein Rotor oder ein Kolben, erzeugten charakteristischen Klangs; und
- ein mit dem Schallsensor (5) verbundenes Steuermodul (8) zum Empfangen und Behandeln eines durch den Schallsensor (5) erzeugten Schalldetektionssignals und zum Feststellen eines dem Wasserzähler (10) nachgeordneten Wasserlecks in Funktion des Schalldetektionssignals.

2. Überwachungssystem (9) nach Anspruch 1, wobei das Steuermodul (8) zum Feststellen eines dem Wasserzähler (10) nachgeordneten Wasserlecks konfiguriert ist, indem mindestens ein Vergleich des Schalldetektionssignals mit mindestens einem Schwellenwert durchgeführt wird.

3. Überwachungssystem (9) nach Anspruch 2, wobei das Steuermodul (8) zum Feststellen eines dem Wasserzähler (10) nachgeordneten Wasserlecks konfiguriert ist, indem mindestens ein Vergleich eines für einen Geräuschpegel repräsentativen Parameters des Schalldetektionssignals mit mindestens einem Schwellenwert des Geräuschpegels durchgeführt wird.

4. Überwachungssystem (9) nach einem der vorstehenden Ansprüche, wobei das Steuermodul (8) zum Feststellen eines dem Wasserzähler (10) nachgeordneten Wasserlecks konfiguriert ist, indem mindestens ein Vergleich des Schalldetektionssignals mit über einem vergangenen Zeitraum erzeugten Schalldetektionssignalen durchgeführt wird.

5. Überwachungssystem (9) nach einem der vorstehenden Ansprüche, wobei das Steuermodul (8) zum Feststellen eines dem Wasserzähler (10) nachgeordneten Wasserlecks konfiguriert ist, indem mindestens eine Verarbeitung des Schalldetektionssignals über mindestens einen Referenzzeitraum, wie einem vordefinierten Zeitabschnitt und insbesondere einem nächtlichen Zeitabschnitt, durchgeführt wird.

6. Überwachungssystem (9) nach einem der vorstehenden Ansprüche, wobei der Schallsensor (5) unter einem Textilfutter (6), vorgesehen im Inneren des Mittelstücks (2) der Abdeckung (1), angeordnet ist.

7. Überwachungssystem (9) nach einem der vorstehenden Ansprüche, wobei das Mittelstück (2) der Abdeckung (1) zu Schutzzwecken gegen das Einfrieren des Wasserzählers (10) mindestens teilweise aus thermischem Textilmaterial ausgeführt ist.

8. Überwachungssystem (9) nach einem der vorstehenden Ansprüche, wobei das Mittelstück (2) der Abdeckung (1) in geschlossener rohrförmigen Hülsenform vorliegt, ausgestaltet, um um den Wasserzähler (10) herum eingeführt oder eingeschoben zu werden.

9. Überwachungssystem (9) nach einem der vorstehenden Ansprüche, wobei das Steuermodul (8) im Inneren der Abdeckung (10) und zum Beispiel im Inneren eines Deckels (4) der Abdeckung (1) angeordnet ist, der über einer oberen Öffnung des Mittelstücks (2) geöffnet oder verschlossen werden kann.

10. Überwachungssystem (9) nach einem der vorstehenden Ansprüche, umfassend des Weiteren eine interne Leckdetektionsvorrichtung für eine Detektion eines Wasserlecks an dem Wasserzähler (10), wobei die interne Leckdetektionsvorrichtung umfasst:
- eine interne Hülse (6), ausgeführt aus einem undurchlässigen Textilmaterial und sich im Inneren des Mittelstücks (2) der Abdeckung (1) erstreckend, wobei die interne Hülse (6) eine Öffnung (60), mit einem System (61) zum peripheren Spannen ausgestattet, vorgesehen für ein Spannen der Öffnung (60) um den Wasserzähler (10) herum, aufweist;
- mindestens einen Wasseranwesenheitssensor (7), angeordnet im Inneren der Abdeckung (1) oberhalb der Öffnung (60) der internen Hülse (6), wobei der Wasseranwesenheitssensor (7) zum Detektieren, in der Situation, einer Anwesenheit leckenden und sich in einer in der internen Hülse (6) gebildeten Tasche und oberhalb der Öffnung (60) um den Wasserzähler (10) herum sammelnden Wassers des Wasserzählers (10), oberhalb der um den Wasserzähler (10) herum gespannten Öffnung (60), in Kommunikation mit dem Inneren der internen Hülse (6) angeordnet ist; und
- ein mit dem Wasseranwesenheitssensor (7) verbundenes Steuermodul (8) zum Empfangen und Verarbeiten eines durch den Wasseranwesenheitssensor (7) erzeugten Wasseranwesenheitsdetektionssignals und zum Feststellen eines Wasserlecks an dem Wasserzähler (10) in Funktion des Wasseranwesenheitsdetektionssignals.

11. Überwachungssystem (9) nach einem der vorstehenden Ansprüche, umfassend des Weiteren ein Kommunikationsmodul (82) und insbesondere eine drahtloses Kommunikationsmodul (82), verbunden mit dem Steuermodul (8) zum Empfang eines durch das Steuermodul (8) erzeugten Warnsignals eines nachgeordneten Wasserlecks (SFA) bei einer Detektion eines dem Wasserzähler (10) nachgeordneten Wasserlecks und zum anschließenden Kommunizieren des Warnsignals eines nachgeordneten Wasserlecks (SFA) nach außen.

12. Überwachungsinstallation (90) eines Wasserzählers (10), umfassend mindestens ein Überwachungssystem (9) in Übereinstimmung mit dem vorstehenden Anspruch und einen Fernserver (91) im Kommunikation mit dem Kommunikationsmodul (82) des Überwachungssystems (9), wobei der Fernserver (91) konfiguriert ist zum Empfangen des Warnsignals eines nachgeordneten Wasserlecks (SFA) und zum Kommunizieren, als Reaktion auf diesen Empfang, eines Alarmsignals (AL) in Richtung mindestens eines Anwenders oder eines Betreibers des Wasserzählers (10).

13. Überwachungsinstallation (90) nach dem vorstehenden Anspruch, wobei der Fernserver (91) das Alarmsignal (AL) mindestens einer der folgenden komplementären Informationen zuordnet: Informationen zur Geolokalisierung des Wasserzählers (10), Informationen in Bezug auf die Koordinaten eines Unterstützungsdienstes, Informationen in Bezug auf die Koordinaten eines oder mehrerer Fachleute auf dem Gebiet von Wasserlecks.

14. Überwachungsverfahren eines Wasserzählers (10), wobei das Überwachungsverfahren einen Positionierungsschritt einer Abdeckung (1) um den Wasserzähler (10) herum, wobei die Abdeckung (1) mit einem Mittelstück (2) versehen ist, vorgesehen zum Umhüllen des Wasserzählers (10), und einen Detektionsschritt eines dem Wasserzähler (10) nachgeordneten Wasserlecks umfasst, indem die folgenden Unterschritte durchgeführt werden:
- Detektion eines für ein Strömen zirkulierenden Wasser durch den Wasserzähler (10) und durch ein im Inneren des Wasserzählers (10) für die Zählung angeordnetes bewegliches Teil wie eine Turbine, ein Rotor oder ein Kolben erzeugten charakteristischen Klangs, wobei die Detektion mittels mindestens eines Schallsensors (5), angeordnet im Inneren des Mittelstücks (2) der Abdeckung (1), ausgeführt wird; und
- Empfang und Verarbeitung des durch den Schallsensor (5) erzeugten Schalldetektionssignals mittel eines mit dem Schallsensor (5) verbundenen Steuermoduls (8) und Feststellung des dem Wasserzähler (10) nachgeordneten Wasserlecks in Funktion des Schalldetektionssignals.

15. Überwachungsverfahren nach Anspruch 14, umfassend des Weiteren einen Erzeugungsschritt eines Warnsignals eines nachgeordneten Wasserlecks (SFA) bei einer Detektion eines dem Wasserzähler (10) nachgeordneten Wasserlecks, gefolgt von einem Kommunikationsschritt, insbesondere einer drahtlosen Kommunikation, des Warnsignals eines nachgeordneten Wasserlecks (SFA) nach außen.

## Claims

1. A monitoring system (9) for a water meter (10), said monitoring system (9) comprising a cover (1) provided with a central portion (2) provided to wrap the water meter (10), and further comprising a downstream leak detection device for detecting a water leak downstream from said water meter (10), said downstream leak detection device comprising:
- at least one acoustic sensor (5) disposed inside the central portion (2) of the cover (1), said acoustic sensor (5) being provided to, in situation, detect a sound characteristic of a flow of water flowing through the water meter (10) and generated by a movable portion, such as a turbine, a rotor or a piston, disposed inside the water meter (10) for the metering; and
- a control module (8) connected to said acoustic sensor (5) for receiving and processing an acoustic detection signal generated by said acoustic sensor (5), and determining a water leak downstream from said water meter (10) as a function of said acoustic detection signal.

2. The monitoring system (9) according to claim 1, wherein the control module (8) is configured to determine a water leak downstream of said water meter (10) by at least implementing a comparison of said acoustic detection signal with at least one threshold.

3. The monitoring system (9) according to claim 2, wherein the control module (8) is configured to determine a water leak downstream of said water meter (10) by at least implementing a comparison of a parameter representative of a sound level of said acoustic detection signal with at least one sound level threshold.

4. The monitoring system (9) according to any one of the preceding claims, wherein the control module (8) is configured to determine a water leak downstream of said water meter (10) by at least implementing a comparison of said acoustic detection signal with acoustic detection signals generated over a past period.

5. The monitoring system (9) according to any one of the preceding claims, wherein the control module (8) is configured to determine a water leak downstream of said water meter (10) by at least implementing a processing of said acoustic detection signal over at least one reference period, such as a predefined time slot, and in particular a night time slot.

6. The monitoring system (9) according to any one of the preceding claims, wherein the acoustic sensor (5) is disposed under a textile lining (6) provided inside the central portion (2) of the cover (1).

7. The monitoring system (9) according to any one of the preceding claims, wherein the central portion (2) of the cover (1) is made at least partially of thermal textile material for the purpose of protection against freezing of the water meter (10).

8. The monitoring system (9) according to any one of the preceding claims, wherein the central portion (2) of the cover (1) is in the form of a closed tubular sleeve shaped to be put on or slipped around the water meter (10).

9. The monitoring system (9) according to any one of the preceding claims, wherein the control module (8) is disposed inside the cover (1), and for example inside a lid (4) of the cover (1) which can be opened or closed on an upper opening of the central portion (2).

10. The monitoring system (9) according to any one of the preceding claims, further comprising an inner leak detection device for detecting a water leak on the water meter (10), said inner leak detection device comprising:
- an inner sleeve (6) made of an impermeable textile material, and extending inside the central portion (2) of the cover (1), where the inner sleeve (6) has an opening (60) provided of a peripheral clamping system (61) provided for clamping said opening (60) around the water meter (10);
- at least one water presence sensor (7) disposed inside the cover (1) above said opening (60) of the inner sleeve (6), said water presence sensor (7) being disposed in communication with the inside of the inner sleeve (6) in order, in situation, to detect the presence of water leaking from the water meter (10) above the opening (60) tightened around the meter of water (10) and accumulated in a pocket formed in the inner sleeve (6) and around the water meter (10) above the opening (60); and
- a control module (8) connected to said water presence sensor (7) to receive and process a water presence detection signal generated by said water presence sensor (7), and to determine a leak in water on the water meter (10) as a function of said water presence detection signal.

11. The monitoring system (9) according to any one of the preceding claims, further comprising a communication module (82), and in particular a wireless communication module (82), connected to the control module (8) to receive a warning signal of a downstream water leak (SFA) generated by the control module (8) upon detection of a water leak downstream from said water meter (10), and to then communicate to the outside said warning signal of a downstream water leak (SFA).

12. A monitoring installation (90) for a water meter (10), comprising at least one monitoring system (9) in accordance with the preceding claim and a remote server (91) in communication with the communication module (82) of the monitoring system (9), said remote server (91) being configured to receive said warning signal of a downstream water leak (SFA) and to communicate, in response to this reception, a signal of alarm (AL) intended for at least one user or operator of said water meter (10).

13. The monitoring installation (90) according to the preceding claim, wherein the remote server (91) associates the alarm signal (AL) with at least one of the following additional information: a geolocation information of the water meter (10), an information relating to the contact details of a support service, an information relating to the contact details of one or more professionals in the water leak sector.

14. A monitoring method for monitoring a water meter (10), said monitoring method comprising a step of positioning a cover (1) around the water meter (10), said cover (1) being provided with a central portion (2) provided to wrap the water meter (10), and a step of detecting a water leak downstream of said water meter (10) by implementing the following sub-steps of:
- detecting a sound characteristic of a flow of water circulating through the water meter (10) and generated by a movable part, such as a turbine, a rotor or a piston, disposed inside the water meter (10) for metering, said detection being carried out by means of at least one acoustic sensor (5) disposed inside the central portion (2) of the cover (1); and
- receiving and processing the acoustic detection signal generated by said acoustic sensor (5) by means of a control module (8) connected to said acoustic sensor (5), and determining the water leak downstream of said water meter (10) as a function of said acoustic detection signal.

15. The monitoring method according to claim 14, further comprising a step of generating a warning signal of a downstream water leak (SFA) upon detection of a downstream water leak from the water meter (10), followed by a step of communicating, in particular wireless communication, to the outside of said warning signal of a downstream water leak (SFA).
